(19) Europäisches Patentamt
European Patent Office
Office européen des brevets

(11) **EP 1 326 799 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(21) Anmeldenummer: **01985774.7**

(22) Anmeldetag: **26.09.2001**

(51) Int Cl.:
*C01B 13/14* (2006.01)      *C01B 17/20* (2006.01)
*C01B 9/00* (2006.01)      *C01G 23/00* (2006.01)
*C09K 5/16* (2006.01)      *H01B 3/12* (2006.01)
*H01M 4/02* (2006.01)

(86) Internationale Anmeldenummer:
**PCT/EP2001/011159**

(87) Internationale Veröffentlichungsnummer:
**WO 2002/027765 (04.04.2002 Gazette 2002/12)**

(54) **STÖCHIOMETRIEÄNDERUNG EINES IONISCH AUFGEBAUTEN FESTSTOFFES**

STOICHIOMETRIC MODIFICATION OF AN IONIC STRUCTURED SOLID

MODIFICATION STOECHIOMETRIQUE D'UNE MATIERE SOLIDE EDIFIEE IONIQUEMENT

(84) Benannte Vertragsstaaten:
**AT BE CH CY DE DK ES FI FR GB GR IE IT LI LU MC NL PT SE TR**

(30) Priorität: **26.09.2000 DE 10047625**

(43) Veröffentlichungstag der Anmeldung:
**16.07.2003 Patentblatt 2003/29**

(73) Patentinhaber: **Max-Planck-Gesellschaft zur Förderung
der Wissenschaften e.V.
80539 München (DE)**

(72) Erfinder:
• **MAIER, Joachim
75446 Wiernsheim (DE)**
• **MERKLE, Rotraut, E.
70563 Stuttgart (DE)**
• **DE SOUZA, Roger, A.
70193 Stuttgart (DE)**

(74) Vertreter: **Hertz, Oliver
v. Bezold & Partner
Patentanwälte
Akademiestrasse 7
80799 München (DE)**

(56) Entgegenhaltungen:
EP-A- 0 286 106      EP-A- 0 480 789
EP-A- 0 533 236      EP-A- 0 819 649
EP-A1- 0 866 506     US-A- 2 985 757
US-A- 3 651 488      US-A- 3 932 291
US-A- 4 394 858

• HUANG M-H ET AL: "Study on Photochromism in SrTiO3:Fe Ceramic Powder" JOURNAL OF THE EUROPEAN CERAMIC SOCIETY, ELSEVIER SCIENCE PUBLISHERS, BARKING, ESSEX, GB, Bd. 17, Nr. 14, 1997, Seiten 1761-1765, XP004097473 ISSN: 0955-2219
• R. MERKLE ET AL.: "Optically tuning the rate of stoichiometry changes: surface-controlled oxygen incorporation into oxides under UV irradiation" ANGEWANDTE CHEMIE, Bd. 40, Nr. 11, November 2001 (2001-11), Seiten 2126-2129, XP002191500 Weinheim (DE)

**Beschreibung**

Die vorliegende Erfindung betrifft ein Verfahren zur Veränderung der Stöchiometrie eines ionisch aufgebauten Feststoffs und die Verwendung des stöchiometrisch veränderten Feststoffs in einem Speicherelement zur Speicherung chemischer Energie.

Änderungen der bulk-Stöchiometrie von oxidischen Feststoffen sind bereits beschrieben worden. Diese konnten beschleunigt werden, wenn während der Sauerstoffaufnahme oder -abgabe des oxidischen Feststoffs die Temperatur erhöht wurde und/oder die Oberfläche des Feststoffs chemisch verändert wurde.

Bei den bisher bekannten Verfahren der Änderung der Stöchiometrie von oxidischen Feststoffen war die Sauerstoff-Austauschkinetik dieser Feststoffe durch Ein-/Ausbauprozesse an der Oberfläche begrenzt. Die Temperaturen lagen dabei in nicht extrem hohen Bereichen. Diese Ein- bzw. Ausbauprozesse wurden durch Aufbringen katalytisch aktiver Metallschichten oder Metalloxidschichten beschleunigt. Zu den aktiven Metallschichten zählen beispielsweise Platinschichten, während als Metalloxidschichten beispielsweise solche aus $Cr_2O_3$ verwendet wurden.

Es hatte sich allerdings im Stand der Technik auch gezeigt, daß bei der UV-Bestrahlung auf Halbleiter mit großer Bandlücke, wie beispielsweise $TiO_2$ oder $SrTiO_3$, energiereiche freie Ladungsträger erzeugt werden, die im angrenzenden Medium zu chemischen Reaktionen führen. Dazu zählen beispielsweise die Photolyse von Wasser und die Oxidation organischer Moleküle in unmittelbarer Umgebung der Halbleiter.

Huang et al. (Journal of the European Ceramic Society, Bd. 17, Nr. 14, 1761-1765 (1997)) beschreiben den photochromen Effekt in Keramikpulver aus Fe-dotiertem $SrTiO3$. Zur Beobachtung dieses Effekts wird das Pulver bei Raumtemperatur mit optischer Energie bestrahlt. Bei dieser relativ niedrigen Temperatur kommt es durch die Bestrahlung zwar zu elektronischen Einfangvorgängen, jedoch zu keiner Stöchiometrieänderung in diesem Halbleiter.

In US-A-3,651,488 wird ein Informationsspeicherungsmedium offenbart, das aus zwei unterschiedlichen Materialien besteht, wobei in dem einen Material durch eine optische Bestrahlung ein elektrisches Feld erzeugt wird, durch das sich beim anderen Material der Brechungsindex ändert. Diese Änderung ist jedoch nur auf die Anwesenheit des elektrischen Feldes und nicht auf eine Stöchiometrieänderung zurückzuführen.

EP 0 286 106 A beschreibt ein Verfahren mit dem die Sauerstoffstöchiometrie bestimmter Oxide entweder durch Partikelstrahlung oder elektromagnetische Strahlung verändert wird. Als elektromagnetische Strahlung wird Laserlicht (z.B. $CO_2$-Laser) oder IR-Licht verwendet, um die Probe auf eine gewünschte Temperatur zu erhitzen. Soweit diese Oxide Halbleitermaterialien umfassen, handelt es sich um Materialien mit kleiner Bandlücke und die elektromagnetische Bestrahlung erfolgt nur zur Aufheizung des Probenmaterials.

In EP 0 480 789 A ist ein Verfahren beschrieben, bei dem ein amorphes, nicht stöchiometrisches (teilweise reduziertes) und deswegen stark lichtabsorbierendes Oxid durch Absorption von optischer Energie unterhalb der Bandlücke so stark erwärmt wird, dass eine Kristallisation, d.h. eine Phasenumwandlung, stattfindet. Anschließend wird durch Behandeln mit Sauerstoff bei erhöhter Temperatur die korrekte Sauerstoffstöchiometrie wieder hergestellt.

Die Aufgabe der vorliegenden Erfindung besteht darin, ein Verfahren zur Änderung der bulk-Stöchiometrie von ionisch aufgebauten Feststoffen zur Verfügung zu stellen, bei dem die Stöchiometrieänderung des gesamten Feststoffs durch Sauerstoffaufnahme beschleunigt wird oder eine örtlich begrenzte Stöchiometrieänderung erzeugt wird. Dieses soll erreicht werden, ohne daß in ungünstigem Maße die Temperatur erhöht werden muß oder die Oberfläche der Feststoffe chemisch verändert werden muß.

Diese Aufgabe wird erfindungsgemäß mit einem Verfahren gemäß Patentanspruch 1 gelöst.

Die Unteransprüche definieren bevorzugte Ausführungsformen des erfindungsgemäßen Verfahrens.

Die Figuren erläutern das erfindungsgemäße Verfahren. Es zeigen:

Fig. 1   eine graphische Darstellung des Sauerstoffeinbaus und -ausbaus eines hoch eisendotierten Strontiumtitanats bei Änderungen des Sauerstoffpartialdrucks; und

Fig. 2   eine graphische Darstellung des Sauerstoffeinbaus und -ausbaus eines niedrig eisendotierten Strontiumtitanats ohne Änderung des Sauerstoffpartialdrucks.

Die vorliegende Erfindung betrifft ein Verfahren zur Veränderung der Stöchiometrie eines gegebenenfalls dotierten ionisch aufgebauten Feststoffs, bei dem der Feststoff optischer Energie ausgesetzt wird.

Der in dem erfindungsgemäßen Verfahren verwendete ionisch aufgebaute Feststoff ist ein Oxid.

Dieser Feststoff kann mit einem Dotierungsmittel versetzt sein. Als Dotierungsmittel kommen beispielsweise Eisen, Chrom, Mangan, Nickel, Cobalt, Kupfer, Yttrium, Scandium, Aluminium, seltene Erden oder Mischungen daraus (Fe, Cr, Mn, Ni, Co, Cu, Y, Sc, Al) in Frage.

Als oxidisch aufgebaute Feststoffe werden erfindungsgemäß Halbleiter mit großer Bandlücke verwendet. Beispiele für diese Feststoffe sind $TiO_2$, Titanate, $ZrO_2$, Zirkonate, $CeO_2$, Cerate oder $Al_2O_3$.

In einer besonderen Ausführungsform stellt der Halbleiter $SrTiO_3$($Sr(Ti_{1-x},Fe_x)O_{3-\delta}$) dar, worin x = 0 bis 0,2 und

$\delta = 0$ bis 0,1 bedeuten.

Das erfindungsgemäße Verfahren wird alternativ unter Veränderung des Sauerstoffpartialdrucks $p_{O_2}$ durchgeführt. In einer besonders bevorzugten Ausführungsform wird während der Behandlung mit optischer Energie der Sauerstoffpartialdruck erhöht.

Erfindungsgemäß kann jede optische Energie zur Bestrahlung des Feststoffes angewendet werden, allerdings mit der Maßgabe, daß es zu einer Veränderung der Stöchiometrie durch Aufnahme von Sauerstoff kommt. Dazu wird der Feststoff mit Energie oberhalb der Bandlücke des Feststoffs behandelt. In einer besonders bevorzugten Ausführungsform wird als Energie UV-Strahlung verwendet.

Am Beispiel des eisendotierten Strontiumtitanats soll nun nachfolgend das erfindungsgemäße Verfahren näher erläutert werden.

Bei eisendotiertem $SrTiO_3$ kommt es zu Defekten in der Elektronenstruktur des Feststoffs. So werden $Fe^{3+}$ und $Fe^{4+}$ auf Ti-Plätzen eingebaut ($Fe^{3+}_{Ti}$, $Fe^{4+}_{Ti}$). Zur Erhaltung der Elektroneutralität entsteht eine Sauerstoffleerstelle $V_O^{\cdot\cdot}$ pro zwei $Fe^{3+}_{Ti}$. In Abhängigkeit vom Sauerstoffpartialdruck kann nun in die Sauerstoffleerstellen Sauerstoff eingebaut werden, d.h. zu Sauerstoffionen auf regulären Gitterplätzen ($O_o$) unter gleichzeitiger Oxidation von $Fe^{3+}_{Ti}$ zu $Fe^{4+}_{Ti}$. Dieser Oxidationsvorgang läßt sich wie folgt darstellen:

$$0,5\ O_2\ (\text{gasförmig}) + V_O^{\cdot\cdot} + 2Fe^{3+}_{Ti} \rightarrow O_o + 2Fe^{4+}_{Ti}.$$

Somit ist die Stöchiometrie des eisendotierten Strontiumtitanats durch Aufnahme von Sauerstoff auf reguläre Gitterplätze verändert worden.

Das erfindungsgemäße Verfahren läßt sich in Abhängigkeit des Sauerstoffpartialdrucks durchführen. Es werden auch gute Sauerstoffeinbaukinetiken festgestellt, selbst wenn der Sauerstoffpartialdruck während der Bestrahlung nicht geändert wird.

Beispielsweise ist eine Eisendotierung von 4, 60 · $10^{19}$ $Fe/cm^3$ beim Strontiumtitanat als recht hoch anzusehen. Bei dieser hohen Eisendotierung führt beispielsweise eine UV-Bestrahlung während einer Erhöhung des Sauerstoffpartialdrucks zu einer Beschleunigung der Stöchiometrieänderung, was dem Netto-Sauerstoffeinbau entspricht. Es hat sich herausgestellt, daß der Oberflächenaustauschkoeffizient k um mehrere hundert Prozent erhöht wird. Der Oberflächenaustauschkoeffizient nimmt linear mit der eingestrahlten Lichtintensität zu.

Es ist außerdem festgestellt worden, daß die UV-Bestrahlung des Feststoffs während einer Verminderung des Sauerstoffpartialdrucks im Rahmen der Meßgenauigkeit keinen Einfluß auf die Geschwindigkeit der Stöchiometrieänderung hat.

Weitere Untersuchungen haben zu dem Ergebnis geführt, daß die UV-Bestrahlung des oxidischen Feststoffes ohne gleichzeitige Änderung des Sauerstoffpartialdrucks zu einer geringen Erhöhung der $Fe^{4+}$-Konzentration führt.

Eine geringe Eisendotierung des Strontiumtitanats beträgt beispielsweise $5 \times 10^{18}$ - $1,4 \times 10^{19}$ $Fe/cm^3$. Hier hat sich herausgestellt, daß UV-Bestrahlung ohne gleichzeitige Änderung des Sauerstoffpartialdrucks zu einer deutlichen Erhöhung in der $Fe^{4+}$-Konzentration führt, die im untersuchten Temperaturbereich und bei der angewandten Strahlungsleistung bis zu 35% beträgt. Die Erhöhung der $Fe^{4+}$-Konzentration nimmt mit steigender Strahlungsleistung zu.

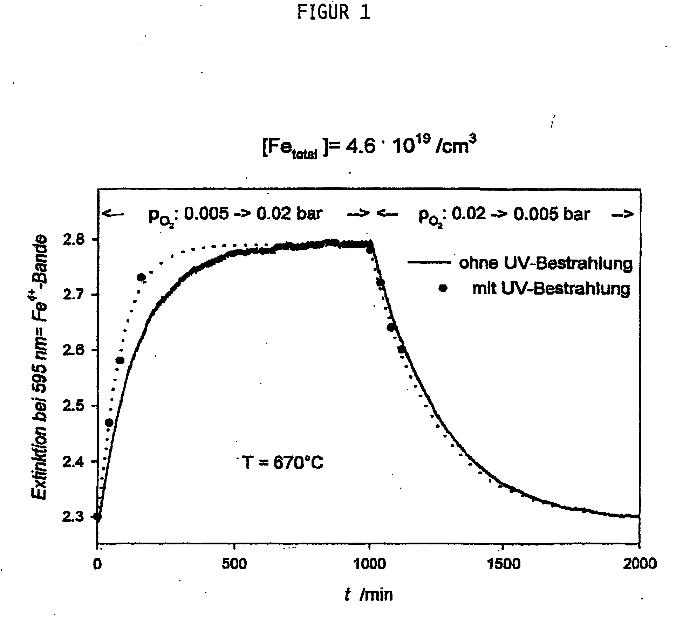

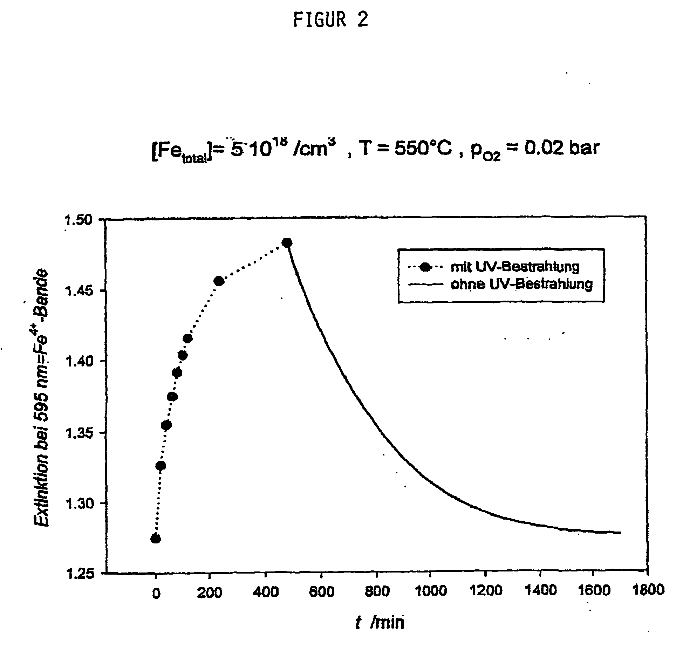

Dieses ist anschaulich in den Figuren 1 und 2 gezeigt. Figur 1 beschreibt am Beispiel des hoch eisendotierten Strontiumtitanats einen Anstieg des Sauerstoffeinbaus unter UV-Bestrahlung, wenn der Sauerstoffpartialdruck $p_{O_2}$ erhöht wird (erster Teil der Kurven). Eine Änderung des Sauerstoffausbaus aus dem Feststoff bei andauernder UV-Bestrahlung ist nicht zu verzeichnen, wenn der Sauerstoffpartialdruck verringert wird (zweiter Teil der Kurven).

Figur 2 zeigt eine Sauerstoffaufnahme-Messung an einem niedrig eisendotierten Strontiumtitanat, bei dem während der UV-Bestrahlung der Sauerstoffpartialdruck nicht verändert wird. Die Extinktion und damit die $Fe^{4+}$-Konzentration nimmt während der UV-Bestrahlung zu und verringert sich wieder, wenn die UV-Strahlung ausgeschaltet wird und weiterhin bei erhöhter Temperatur gehalten wird.

Die Temperatur, bei der der Sauerstoffaustausch unter Bestrahlung mit optischer Energie, beispielsweise UV-Licht, erfolgt, liegt bei dem erfindungsgemäßen Verfahren in einem Bereich von 350 bis 750°C. Generell ist festzustellen, daß die Beeinflussung des Sauerstoffaustauschs durch beispielsweise UV-Bestrahlung um so stärker ausgeprägt ist, je tiefer die Temperatur ist.

Eine Bestrahlung mit Energie unterhalb der Bandlücken ergibt keine Änderung der Stöchiometrie bei den ionisch aufgebauten Feststoffen.

Obwohl der Mechanismus des Sauerstoffeinbaus und -ausbaus noch nicht endgültig geklärt ist, kann festgestellt werden, daß Leitungsbandelektronen vor oder einschließlich des geschwindigkeitsbestimmenden Schritts des Einbaus beteiligt sind.

Die vorliegende Erfindung betrifft ebenfalls die Verwendung eines Halbleiters, der mit dem erfindungsgemäßen Verfahren stöchiometrisch verändert wurde, in einem Speicherelement zur Speicherung chemischer Energie.

Dieses Speicherelement besteht aus einem gegebenenfalls dotierten ionisch aufgebauten Feststoff, der mit optischer Energie behandelt worden ist.

Das Speicherelement besteht aus einem ionisch aufgebauten Feststoff, der ein Oxid und ein Halbleiter mit großer Bandlücke ist. Zu solchen Halbleitern zählen beispielsweise $TiO_2$, Titanate, $ZrO_2$, Zirkonate, $CeO_2$, Cerate oder $Al_2O_3$.

Das Speicherelement kann dotiert sein. Für die Dotierung kommen üblicherweise verwendete Dotierungsmittel in Frage. Dazu zählen beispielsweise Eisen, Chrom, Mangan, Nickel, Cobalt, Kupfer, Yttrium, Scandium, Aluminium, seltene Erden oder eine Mischung daraus (Fe, Cr, Mn, Ni, Co, Cu, Y, Sc, Al).

Die Energie, mit der der Feststoff bestrahlt worden ist, liegt oberhalb der Bandlücke des Feststoffs. In einer besonderen Ausführungsform ist das Speicherelement mit UV-Strahlung behandelt worden.

In ganz besonderen Ausführungsformen des Speicherelements ist der Halbleiter eisendotiertes $SrTiO_3$, das eine Eisendotierung von $4{,}60 \cdot 10^{19}$ $Fe/cm^3$ aufweist und eisendotiertes $SrTiO_3$, das eine Eisendotierung von $5 \cdot 10^{18}$ bis $1{,}4 \cdot 10^{19}$ $Fe/cm^3$ aufweist.

Das erfindungsgemäße Verfahren sowie der damit erhältliche Halbleiter mit veränderter Stöchiometrie lassen sich beispielsweise in der Halbleitertechnik hervorragend an- und verwenden.

Die Belichtung mit beispielsweise UV-Licht bei erhöhter Temperatur und unverändertem Sauerstoffpartialdruck mit einer Maske kann eine lokale Verringerung der Sauerstoffleerstellen-Konzentration in den belichteten Bereichen erzeugen, die durch rasches Abkühlen der Probe eingefroren werden kann. Mit der Sauerstoffleerstellen-Konzentration ändert sich lokal auch die elektrische Leitfähigkeit, die Absorption und der Brechungsindex im Bereich der Dotierungsmittelbande. Diese Strukturierung der Probe kann durch erneutes Erhitzen ohne UV-Bestrahlung aufgehoben werden.

Die Verringerung der Sauerstoffleerstellen-Konzentration und damit der Sauerstoff-Nettoeinbau bei unverändertem Sauerstoffpartialdruck durch beispielsweise UV-Bestrahlung stellt eine Umwandlung von optischer Energie in chemische Energie dar. Durch rasches Abkühlen der Probe kann die chemische Energie gespeichert und erst nach erneutem Aufheizen freigesetzt werden.

Die Belichtung mit beispielsweise UV-Strahlung einer gasdichten, sauerstoffionenleitenden keramischen Membran auf der Seite des hohen Sauerstoffpartialdrucks kann die Geschwindigkeit des Sauerstoffeinbaus auf dieser Seite erhöhen und damit auch den gesamten Transport von Sauerstoff (Permeation) durch die Membran beschleunigen. Durch die Bestrahlung kann ein Sauerstofftransport durch die Membran ohne äußeren Partialdruckgradienten oder sogar entgegen einem nicht zu großen Partialdruckgradienten erzeugt werden. Durch die Bestrahlung einer Seite der Membran, die sich in Sauerstoffatmosphäre befindet, kann Sauerstoff auf die andere Seite der Membran "gepumpt" und dort als Sauerstoff oder in einer reaktiveren Form als $O_2$ für chemische Reaktionen freigesetzt werden.

Durch Bestrahlung mit optischer Energie kann die Empfindlichkeit von Sensoren in-situ variiert werden.

Das chemische Speicherelement, in dem der stöchiometrisch veränderte Halbleiter verwendet wird, kann vorteilhafterweise Lichtenergie in chemische Energie umwandeln. Durch Bestrahlung der Oberfläche des oxidischen Feststoffs, der gegebenenfalls ein Dotierungsmittel enthält, wird, ausgehend von einer homogenen Verteilung, ein Sauerstoffgradient aufgebaut. Die auf diese Weise chemisch gespeicherte Energie kann reversibel freigesetzt und beispielsweise elektrisch umgesetzt werden.

Des weiteren lassen sich durch die Lichtbeeinflussung Permeationsmembranen optisch an- und ausschalten, so daß Permeationsmembranen in schaltbare "chemische Ventile" umgewandelt werden.

Es hat sich erfindungsgemäß herausgestellt, daß bei hohen Dotierungen mit Dotierungsmittel die Sauerstoffaustauschreaktion bei den ionisch aufgebauten Feststoffen, in einem Temperaturbereich von 350 bis 730°C grenzflächenkontrolliert verlaufen. Durch Bestrahlung der Oberfläche mit beispielsweise UV-Licht im Energiebereich oberhalb der Bandlücke wird der Oberflächenaustauschkoeffizient k bei einem Sprung zu höheren Sauerstoffpartialdrücken $P_{O_2}$ signifikant erhöht. Dabei verringert sich vorteilhafterweise die effektive Aktivierungsenergie. Im Gegensatz dazu wird k bei einem Sprung zu tieferen Sauerstoffpartialdrücken durch die Bestrahlung nicht verändert. Bei Bestrahlung mit Energien unterhalb der Bandlücke bleibt allerdings k auch bei erhöhten Sauerstoffpartialdrücken unverändert.

Es ist daher davon auszugehen, daß die durch die Lichtbestrahlung erzeugten Elektronen im Leitungsband, deren Anzahl die der thermisch erzeugten Elektronen übertrifft, vor oder im geschwindigkeitsbestimmenden Schritt der Sauerstoffeinbaureaktion beteiligt sind.

Das nachfolgende Beispiel dient lediglich dazu, die vorliegende Erfindung weiter zu erläutern.

Beispiel

Messung der Sauerstoffstöchiometrie in eisendotiertem $SrTiO_3$:

Wegen der Elektroneutralitätsbedingung ist die Konzentration der Sauerstoffleerstellen durch die Konzentration der $Fe^{3+}$ gegeben. Es wird durch optische Spektroskopie die Konzentration an $Fe^{4+}$ bestimmt(die Absorptionsbande von $Fe^{3+}$ überlappt mit der Bandkante und kann nicht direkt gemessen werden) und über die bekannte Gesamteisenkonzentration die Sauerstoffleerstellenkonzentration bestimmt. Aus dem zeitlichen Verlauf der $Fe^{4+}$-Konzentration kann der Oberflächenaustauschkoeffizient k bestimmt werden, der die Kinetik der Stöchiometrieänderung beschreibt.

Die Messungen fanden im Temperaturbereich von 650 bis 730°C statt.

Die Bandlücke von $SrTiO_3$ beträgt 2,7 eV bei 700°C (entsprechend 460 nm Wellenlänge).

Die Proben wurden mit einer Hg-Hochdrucklampe mit Licht von 250 bis 420 nm und einer Leistung auf der Probe von etwa 100 $mW/cm^2$ bestrahlt. Die effektive Aktivierungsenergie des Oberflächenaustauschkoeffizienten k nimmt von 274 kJ/mol ohne UV-Bestrahlung auf 145 kJ/mol mit UV-Bestrahlung ab.

**Patentansprüche**

1. Verfahren zur Veränderung der Stöchiometrie eines gegebenenfalls dotierten ionisch aufgebauten Feststoffes, bei dem es sich um ein Oxid und einen Halbleiter mit großer Bandlücke handelt, wobei der Halbleiter bei einer Temperatur im Bereich von 350°C bis 750°C einer optischer Bestrahlung mit einer Energie ausgesetzt wird, die oberhalb der Bandlücke des Halbleiters liegt, und wobei die Stöchiometrieänderung den Einbau von Sauerstoff in den Halbleiter umfasst.

2. Verfahren nach Anspruch 1, **dadurch gekennzeichnet, dass** der Halbleiter $TiO_2$, Titanate, $ZrO_2$, Zirkonate, $CeO_2$, Cerate oder $Al_2O_3$ umfasst.

3. Verfahren nach mindestens einem der Ansprüche 1 oder 2, **dadurch gekennzeichnet, dass** der Halbleiter dotiert ist, wobei als Dotierungsmittel Fe, Cr, Mn, Ni, Co, Cu, Y, Sc, Al, seltene Erden oder eine Mischung daraus verwendet wird.

4. Verfahren nach Anspruch 1, **dadurch gekennzeichnet, dass** der Halbleiter mit UV-Strahlung bestrahlt wird.

5. Verfahren nach mindestens einem der Ansprüche 1 bis 4, **dadurch gekennzeichnet, dass** als Halbleiter $SrTiO_3$ $(Sr(Ti_{1-x},Fe_x)O_{3-\delta})$, worin x = 0 bis 0,2 und $\delta$ = 0 bis 0,1 bedeuten, verwendet wird.

6. Verfahren nach Anspruch 5, **dadurch gekennzeichnet, dass** das $SrTiO_3$ eine Eisendotierung von $4,60 \cdot 10^{19}$ $Fe/cm^3$ aufweist.

7. Verfahren nach Anspruch 5, **dadurch gekennzeichnet, dass** das $SrTiO_3$ eine Eisendotierung von $5 \cdot 10^{18}$ bis $1,4 \cdot 10^{19}$ $Fe/cm^3$ aufweist.

8. Verfahren nach mindestens einem der Ansprüche 1 bis 7, **dadurch gekennzeichnet, dass** die Bestrahlung mit UV-Licht bei unverändertem Sauerstoffpartialdruck unter Verwendung einer Maske erfolgt, so dass nur in den belichteten Bereichen eine örtlich begrenzte Stöchiometrieänderung erzeugt wird.

9. Halbleiter, dessen Stöchiometrie mit einem Verfahren nach Anspruch 8 so verändert wurde, dass er örtlich begrenzte unterschiedliche Sauerstoff-Stöchiometrien aufweist.

10. Verwendung eines Halbleiters, dessen Stöchiometrie mit einem Verfahren nach einem der Ansprüche 1-8 verändert wurde, in einem Speicherelement zur Speicherung chemischer Energie.

11. Verwendung nach Anspruch 10 zur Erzeugung von Strukturen unterschiedlicher Leitfähigkeit, in der Membrantechnologie oder zur Freisetzung der chemisch gespeicherten Energie.

12. Verwendung nach Anspruch 11, **dadurch gekennzeichnet, dass** die elektrische Leitfähigkeit, die Absorption und/ oder der Brechungsindex verändert werden.

**EP 1 326 799 B1**

13. Verwendung nach Anspruch 12, **dadurch gekennzeichnet, dass** das Speicherelement eine Permeationsmembran ist, wobei es sich bei der Permeationsmembran um eine gasdichte sauerstoffionenleitende keramische Membran handelt.

14. Verwendung nach Anspruch 13, **dadurch gekennzeichnet, dass** die Membran auf einer Seite, die sich in Sauerstoffatmosphäre befindet, mit UV-Licht bestrahlt wird, um einen Sauerstofftransport durch die Membran zu bewirken.

15. Verwendung nach Anspruch 13 oder 14, **dadurch gekennzeichnet, dass** auf einer Seite der Membran chemische Reaktionen mit Sauerstoff stattfinden.

16. Verwendung nach Anspruch 11, **dadurch gekennzeichnet, dass** die chemisch gespeicherte Energie in eine elektromotorische Kraft umgewandelt wird.

**Claims**

1. A method for modifying the stoichiometry of an optionally doped solid of ionic structure, the latter being an oxide and a semiconductor with a large band gap, the semiconductor being exposed at a temperature in the range from 350°C to 750°C to optical irradiation with an energy which is above the band gap of the semiconductor, and the change in stoichiometry including the incorporation of oxygen into the semiconductor.

2. The method according to claim 1, **characterised in that** the semiconductor comprises $TiO_2$, titanates, $ZrO_2$, zirconates, $CeO_2$, cerates or $Al_2O_3$.

3. The method according to at least one of claims 1 or 2, **characterised in that** the semiconductor is doped, Fe, Cr, Mn, Ni, Co, Cu, Y, Sc, Al, rare earths or a mixture thereof being used as the dopant.

4. The method according to claim 1, **characterised in that** the semiconductor is irradiated with UV radiation.

5. The method according to at least one of claims 1 to 4, **characterised in that** $SrTiO_3$ ($Sr(Ti_{1-x}, Fe_x)O_{3-\delta}$), in which $x = 0$ to $0.2$ and $\delta = 0$ to $0.1$, is used as the semiconductor.

6. The method according to claim 5, **characterised in that** the $SrTiO_3$ exhibits iron doping of $4.60 \cdot 10^{19}$ $Fe/cm^3$.

7. The method according to claim 5, **characterised in that** the $SrTiO_3$ exhibits iron doping from $5 \cdot 10^{18}$ to $1.4 \cdot 10^{19}$ $Fe/cm^3$.

8. The method according to at least one of claims 1 to 7, **characterised in that** the irradiation with UV light takes place under an unchanged oxygen partial pressure using a mask, such that a locally limited change in stoichiometry is produced only in the exposed regions.

9. A semiconductor, whose stoichiometry has been modified by a method according to claim 8 such that it comprises different locally limited oxygen stoichiometries.

10. Use of a semiconductor, whose stoichiometry has been modified by a method according to any one of claims 1-8, in a storage element for storing chemical energy.

11. Use according to claim 10 to produce structures of different conductivities, in membrane technology or to release the chemically stored energy.

12. Use according to claim 11, **characterised in that** the electrical conductivity, the absorption and/or the refractive index are modified.

13. Use according to claim 12, **characterised in that** the storage element is a permeation membrane, the permeation membrane comprising a gas-tight, oxygen ion-conducting, ceramic membrane.

14. Use according to claim 13, **characterised in that** the membrane is irradiated with UV light on a side situated in an oxygen atmosphere, in order to effect an oxygen transfer through the membrane.

6

**15.** Use according to claim 13 or claim 14, **characterised in that** chemical reactions with oxygen take place on one side of the membrane.

**16.** Use according to claim 11, **characterised in that** the chemically stored energy is converted into an electromotive force.

## Revendications

**1.** Procédé de modification de la stoechiométrie d'une matière solide à structure ionique, éventuellement dopée, dans lequel il s'agit d'un oxyde et d'un semi-conducteur ayant une large bande interdite, où le semi-conducteur est soumis, à une température située dans la plage allant de 350 °C à 750 °C, à un rayonnement optique qui se situe au-delà de la bande interdite du semi-conducteur, et où la modification de la stoechiométrie comprend l'incorporation d'oxygène dans le semi-conducteur.

**2.** Procédé selon la revendication 1, **caractérisé en ce que** le semi-conducteur comprend du $TiO_2$, des titanates, du $ZrO_2$, des zirconates, du $CeO_2$, des cérates ou de l'$Al_2O_3$.

**3.** Procédé selon au moins l'une des revendications 1 ou 2, **caractérisé en ce que** le semi-conducteur est dopé, l'élément Fe, Cr, Mn, Ni, Co, Cu, Y, Sc, Al, les terres rares ou un mélange de ceux-ci étant utilisés comme agent de dopage.

**4.** Procédé selon la revendication 1, **caractérisé en ce que** le semi-conducteur est irradié avec un rayonnement UV.

**5.** Procédé selon au moins l'une des revendications 1 à 4, **caractérisé en ce que** l'on utilise comme semi-conducteur du $SrTiO_3$ ($Sr(Ti_{1-x}, Fe_x)O_{3-\delta}$), où x = 0 à 0,2 et $\delta$ = 0 à 0,1.

**6.** Procédé selon la revendication 5, **caractérisé en ce que** le $SrTiO_3$ présente un dopage au fer de $4,60 \cdot 10^{19}$ $Fe/cm^3$.

**7.** Procédé selon la revendication 5, **caractérisé en ce que** le $SrTiO_3$ présente un dopage au fer de $5.10^{18}$ à $1,4.10^{19}$ $Fe/cm^3$.

**8.** Procédé selon au moins l'une des revendications 1 à 7, **caractérisé en ce que** l'irradiation avec la lumière UV se fait sous pression partielle d'oxygène non modifiée en utilisant un masque si bien qu'une modification de stoechiométrie localement limitée n'est produite que dans les zones irradiées.

**9.** Semi-conducteur, dont la stoechiométrie a été modifiée par un procédé selon la revendication 8, de sorte qu'il présente des stoechiométries d'oxygène différentes et localement limitées.

**10.** Utilisation d'un semi-conducteur dont la stoechiométrie a été modifiée par un procédé selon l'une des revendications 1 à 8, dans un élément piégeur pour le piégeage de l'énergie chimique.

**11.** Utilisation selon la revendication 10 pour la production de structures ayant différentes conductivités, dans la technologie des membranes ou pour la libération de l'énergie piégée chimiquement.

**12.** Utilisation selon la revendication 11, **caractérisée en ce que** la conductivité électrique, l'absorption et/ou l'indice de réfraction sont modifiés.

**13.** Utilisation selon la revendication 12, **caractérisée en ce que** l'élément piégeur est une membrane de perméation, où la membrane de perméation est une membrane en céramique étanche au gaz et conductrice d'ions oxygène.

**14.** Utilisation selon la revendication 13, **caractérisée en ce que** la membrane est irradiée avec de la lumière UV sur une face qui se trouve dans l'atmosphère d'oxygène pour provoquer un transport d'oxygène à travers la membrane.

**15.** Utilisation selon la revendication 13 ou 14, **caractérisée en ce que** des réactions chimiques avec de l'oxygène se déroulent sur une face de la membrane.

**16.** Utilisation selon la revendication 11, **caractérisée en ce que** l'énergie piégée chimiquement est transformée en

force électromotrice.

FIGUR 1

$[Fe_{total}] = 4.6 \cdot 10^{19} /cm^3$

# FIGUR 2

$$[Fe_{total}] = 5 \cdot 10^{18} / cm^3 \ , \ T = 550°C \ , \ p_{O2} = 0.02 \ bar$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3651488 A
- EP 0286106 A
- EP 0480789 A

**In der Beschreibung aufgeführte Nicht-Patentliteratur**

- **HUANG et al.** *Journal of the European Ceramic Society,* 1997, vol. 17 (14), 1761-1765